# EUROPEAN PATENT APPLICATION

(11) **EP 1 384 920 A1**
(43) Date of publication of application: **28.01.2004**
(21) Application number: 02753749.7
(22) Date of filing: 27.03.2002
(51) Int. Cl.: F16H 15/04, F16H 3/42

(54) **ENGAGEMENT FOR INFINITELY VARIABLE TRANSMISSION**

(30) Priority: 27.03.2001 RU 2001107937
(71) Applicant: Nonprofit Partnership "Innovation Agency", Moscow, 103905 (RU)
(72) Inventor: SIDENKO, Vladimir Vladimirovich, Moscow, 115582 (RU)
(74) Representative: W.P. Thompson & Co.
(86) International application number: PCT/RU2002/000125
(87) International publication number: WO 2002/077490

(57) **Abstract**

The invention relates to mechanical engineering and can be used for all branches of economy for transforming (especially by a stepless transformation) a rotational motion. The engagement of a rotary transmission is performed by two discs. Power elements are circumferentially mounted on the end surface of a disc at an angle with respect to the plane of rotation of the disc. The adjacent (working) surface of the other disc is embodied in a toroidal dentate form.

## Description

### Field of the invention

The invention relates to the machine building and may be used in any industry for transmitting rotary motion including stepless one.

### Background of the invention

A engagement for infinitely variable transmission (infinitely variable speed transmission - variator) containing a package of separable cone discs and packages of cone discs having collars (Bayer system) (Reshetov L.N., "Details of machines", Mashinostroenie Publishing House, 1989, p. 271) is known for those skilled in the art. Output speed is adjusted by shifting axes of the packages accompanied by separation (closing) the discs and changing the contact patch position with respect to the axes of rotation. Transmission ratio (transformation ratio) being changed. Number of the discs per package is specified by the transmission capacity value.

Noise in operation, limited adjustment range (α≤5) as well as low efficiency are the disadvantages of said device. To move the disc axes said transmission has a gear set that is a complication resulting additionally in lowering the efficiency. In overloading resulting in slipping the variator breaks down, since flats are generated on the disc. This is a chronic disadvantage of the friction transmission. The losses due to multiple speed changing along the contact island (geometrical slip) is also a chronic disadvantage.

These disadvantages are partially eliminated in the frictionless variator design, disclosed in the certificate of authorship No 954678. The variator consists of a shaft having a cylindrical joint supporting a flat swivel washer having an idle disc provided with teeth on its both ends. Both faces of the disc engage resilient members designed in the form of springing plates and installed on proper discs. This variator is of two design options having the transmission ratio variation ranges as follows: 0.383 *≥ i* ≤ - 0.383 and 1.36 ≥ *i* ≤ 1.

In comparison with the device known for those skilled in the art (frictionless Bayer variator) the above device has higher efficiency and lower noise in operation. A limited transmission ratio range is a disadvantage of the device. This disadvantage is eliminated in engineering solution "Variator section" (RF Patent No 2064619).

Said device has three discs namely drive, idle and driven. The drive disc internal end surface is in the form of a shaped cut, and load-bearing elements of springy wire are installed circularly on the adjoined end surface of the idle disc, arranged at an angle with the drive disc axis, and being optionally moved radially in the plane of the angle. A shaped cut is on the idle disc opposite side, and the load-bearing elements arranged circularly are on the driven disc; free ends of the load-bearing elements form a flat surface.

Relatively low specific capacity (a capacity per variator unit volume) is a disadvantage of the device.

A engagement for infinitely variable transmission characterized by the load-bearing elements in the form of rigid rectangular plates provided with cylindrical work surface, secured at one disc by spherical self-alignment bearings and engaging the adjoined disc provided with the shaped teeth (RF Paten No 2153614 "Engagement for infinitely variable transmission") is known for those skilled in the art.

The fact that the surface (end) of the adjoined toothed disc is flat or conical is the disadvantage of the engineering solution known for those skilled in the art. Variation in the transmission ratio is achieved by moving one of the discs in parallel (or close to parallel) to the toothed disc work surface, i.e. along a straight line. On the one hand such a moving assumes the presence of free volume in the variator body, and on the other hand it requires to develop rather complicated device to assure such (straight) motion.

### Summary of the invention

The objects of the invention are in reducing the variator volume and simplifying its design.

The objects are achieved by forming the toothed disc work surface formed by teeth as toroidal surface.

The work toroidal surface of the toothed disc may be both concave and convex.

The plan view of a tooth may be radial, straight, lying in diametral planes of the toroidal surface generator.

The plan view of a tooth may be curved.

The tooth work surface may be flat.

The tooth work surface cross section may be concave, wedge-like.

The tooth work surface cross section may be curvilinear.

The tooth work surface cross section may be composed of two curilinear toroidal surfaces forming an angle of less than 180° in the butt.

The load-bearing element work surface may be in the form of both a cylinder and toroid.

### Brief description of drawings

Embodiments of the invention will now be described with reference to the accompanying drawings, in which
Fig. 1 is a general view of the two-disc engagement;
Fig. 2 is a cross section of the engaged load-bearing elements;
Fig. 3 is the load-bearing element and the diagram of installing thereof on the disc;
Fig. 4 is the toothed disc option;
Fig. 5 is the tooth cross section option;
Fig. 6 is the tooth cross section option;
Fig. 7 is the tooth cross section option.

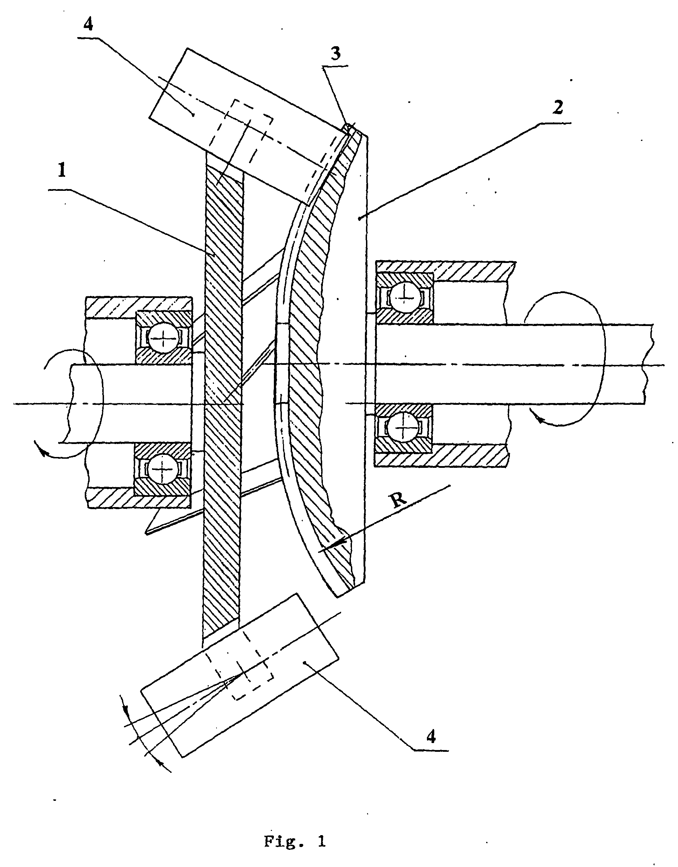

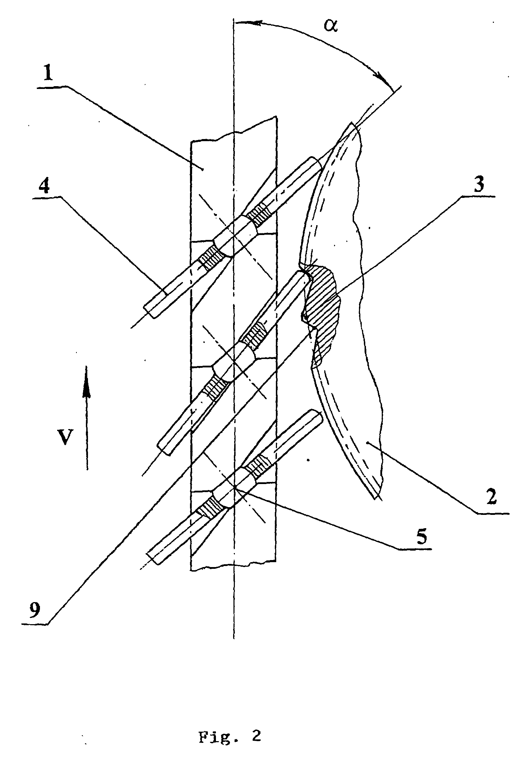

The inventive device consists of two discs 1 and 2 (Figs. 1, 2). One disc, e.g. disc 2 has shaped teeth 3, while another has load-bearing elements 4. Load-bearing elements 4 are arranged at angle α with trajectory (see Fig. 2) using spherical joint 5 so to be optionally tilted in their plane and tilted by angle Δα from this plane.

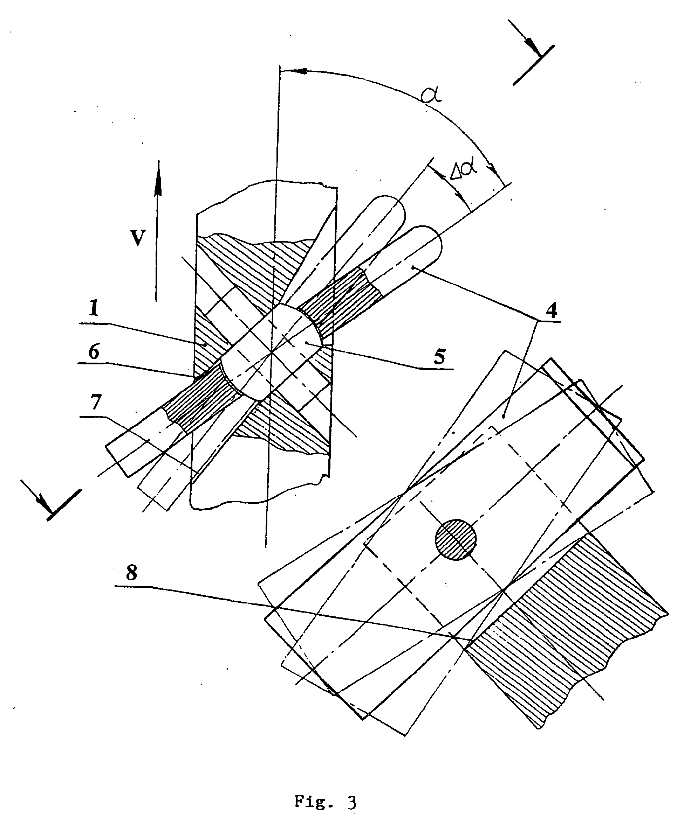

The utmost positions of the load-bearing elements are limited by arresters 6, 7 and 8, which may be rigid (Fig. 3) or flexible.

The shape of cross section of work surface 9 of teeth 3 may look like a straight-line segment (see Fig. 2).

The transmission ratio may be changed by moving one disc with respect to another one so that an engaged load-bearing element moves in diametral plane of the toothed disc toroidal surface in equidistant manner with respect to said surface or close to the equidistant manner.

The inventive engagement operates in the manner as follows. In rotating disc 1 load-bearing elements 3 are pressed against arrester 6 under action of aerodynamic forces or under action of special resilient members. The load-bearing elements engage teeth 3 of adjacent disc 2 alternately thereby transferring hoop forces to the disc. So due to shperical joint 5 load-bearing element 3 is self-adjusted with respect to teeth 3 under action of contact forces. To change the transmission ratio one disc (of smaller diameter as usual) moves (by rotation, in plane-parallel direction or both) in diametral plane of the toothed disc toroidal surface so that the engaged load-bearing element moves in equidistant manner with respect to said toroidal surface or close to the equidistant manner. The disc being not fall outside the large disc overall dimensions thereby reducing the variator body volume.

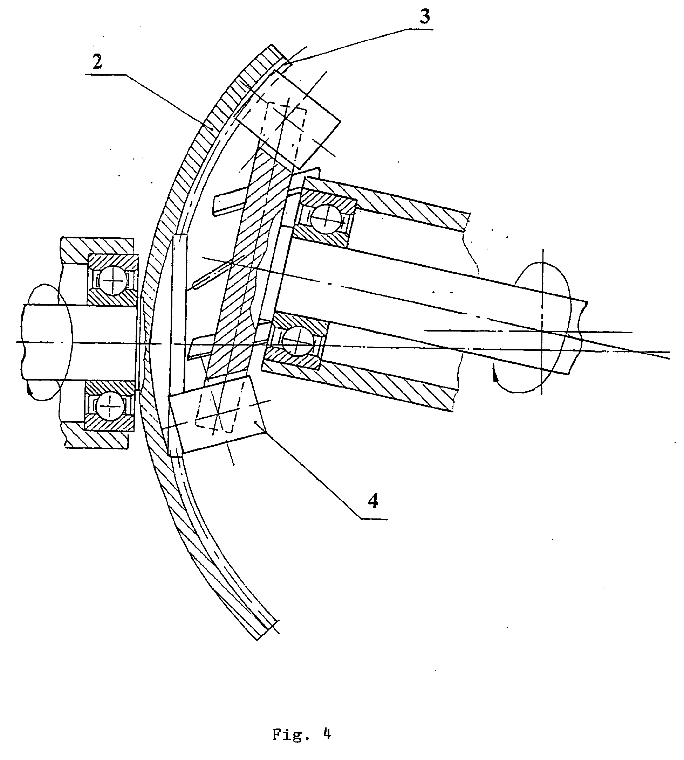

The toothed disc may be convex (see Fig. 1) or concave (Fig. 4).

Axes of revolution of the discs may be at an angle with each other (see Fig. 4), the axis of revolution of the disc carrying the load-bearing elements may pass through the center of the arc forming the toothed disc toroidal surface or close to it.

In both cases the teeth projection to the disc plan may be radial, straight, lying in diametral planes of the disc toroidal surface generator.

Teeth projection to the plan may be curvilinear, e.g. circular. The teeth may have flat work surface 9.

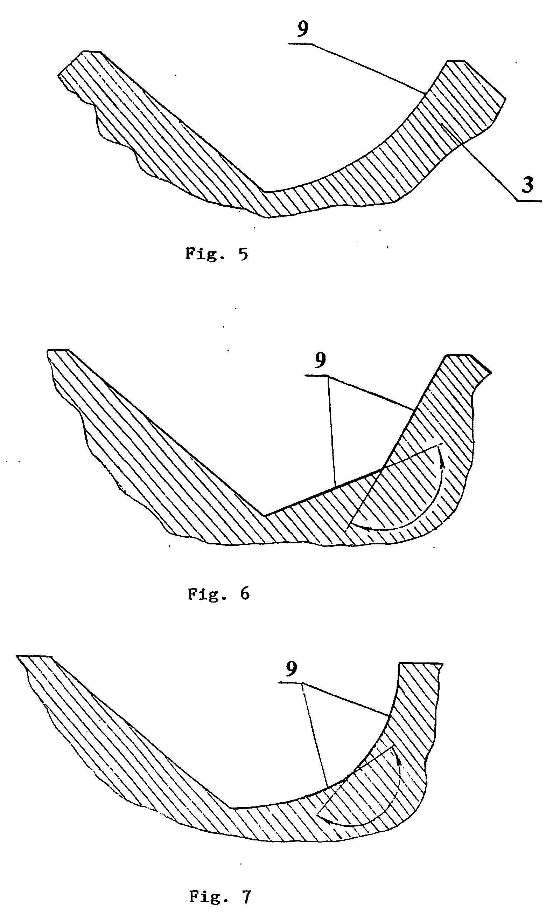

Work surface 9 of tooth 3 may be curvilinear (Fig. 5).

The cross section of work surface 9 of tooth 3 may be formed by two straight-line segments (Fig. 6) forming a concave angle of less than 180°.

The cross section of work surface 9 of tooth 3 may be formed by two concave arcs (Fig. 7).

The three last options of the tooth shape provide increase in load-carrying ability of the engagement, the two last options provide this due to two-point contact between the load-bearing element and tooth.

The load-bearing element work surfaces may be both cylindrical and toroidal. The first case decreases the contact stress in the engagement, while the second one decreases the friction loss.

### Industrial applicability

Application of the present invention allows one to vary the transmission ratio by moving one disc with respect to another along an arc, rather than a straight line, that simplifies the design. Besides, moving one disc along the arc (equidistantly with respect to the toothed disc work surface) allows the moved disc (smaller one as usual) not to fall outside the large disc overall dimensions thereby reducing the variator volume.

The invention may be effectively used in stepless transmissions, e.g. under RF Patent No 2153614.

## Claims

1. Engagement for infinitely variable transmission comprising load-bearing elements arranged circularly in the plane of rotation of a disc, wherein said load-bearing elements being connected to said disc by spherical joints, and shaped teeth engaging said load-bearing elements and arranged on the surface of another toothed disc, **characterized in that** the toothed disc work surface formed by the teeth is toroidal.

2. Engagement for infinitely variable transmission as in claim 1, **characterized in that** the teeth-formed toothed disc work surface is convex.

3. Engagement for infinitely variable transmission as in claim 1, **characterized in that** the teeth-formed toothed disc work surface is concave.

4. Engagement for infinitely variable transmission as in claims 1 - 3, **characterized in that** the teeth are radial, straight, lying in diametral planes of the disc toroidal surface generator.

5. Engagement for infinitely variable transmission as in claims 1 - 3, **characterized in that** the plan view of teeth is curvilinear.

6. Engagement for infinitely variable transmission as in claims 4 - 5, **characterized in that** the tooth work surface cross section is straight-line.

7. Engagement for infinitely variable transmission as in claims 4 - 5, **characterized in that** the tooth work surface cross section is concave, wedge-like.

8. Engagement for infinitely variable transmission as in claims 4 - 5, **characterized in that** the tooth work surface cross section is concave, curvilinear, torus-like.

9. Engagement for infinitely variable transmission as in claims 4 - 5, **characterized in that** the tooth work surface cross section consists of two concave, curvilinear surfaces.

10. Engagement for infinitely variable transmission as in claims 1 - 9, **characterized in that** said work surfaces of said load-bearing elements are cylindrical.

11. Engagement for infinitely variable transmission as in claims 1 - 9, **characterized in that** said work surfaces of said load-bearing elements are toroidal.
